# EUROPEAN PATENT SPECIFICATION

(11) **EP 0 276 790 B1**
(45) Date of publication and mention of the grant of the patent: **29.06.1994**
(21) Application number: 88101017.7
(22) Date of filing: 25.01.1988
(51) Int. Cl.: B32B 25/20, C08J 5/12, B29C 45/16

(54) **Integral molded article of polyolefin resin and silicone rubber and method for its production**
Integral-Formkörper aus Polyolefinharz und Silikongummi und Verfahren zu dessen Herstellung
Produit intégral moulé d'une résine polyoléfinique et un caoutchouc à base de silicone et méthode pour sa fabrication

(30) Priority: 26.01.1987 JP 15652/87
(43) Date of publication of application: 03.08.1988
(73) Proprietor: Toray Silicone Company, Ltd., Chuo-ku Tokyo 103 (JP)
(72) Inventor: Saito, Masayuki, Ichihara-shi Chiba Prefecture (JP); Hamada, Mitsuo, Kisarazu-shi Chiba Prefecture (JP); Shimizu, Koji, Ichihara-shi Chiba Prefecture (JP); Nakasuji, Katsuyoshi, Ichihara-shi Chiba Prefecture (JP)
(74) Representative: Spott, Gottfried, Dr.

(56) References cited:
- EP-A- 0 183 553
- FR-A- 2 197 725
- FR-A- 2 597 028
- US-A- 4 035 534

## Description

The present invention relates to an integral polyolefin resin/silicone rubber molded article and a method for its production.

Molded articles in which polyolefin resin and silicone rubber are tightly unified are unknown in the art because strong bonding between polyolefin resin (for example, polyethylene resin or polypropylene resin) and silicone rubber was thought to be substantially impossible. Methods are known in which the surface of a polyethylene resin molded article is treated by corona discharge or glow discharge, and a silicone rubber composition is then brought into contact with this surface and cured. However, the polyethylene resin/silicone rubber bonding strength is poor in articles molded by this technique. The resulting products are not molded articles in which the two substances are tightly unified.

With the expansion of the applications of silicone rubbers in the electric/electronic field and the automotive sector, the demand has arisen in the last few years both for molded articles in which polyolefin resin is firmly bonded to and unified with silicone rubber, and for a method for the production of such molded articles.

The present inventors intensively researched this subject, and developed the present invention as a consequence.

An object of the present invention is to provide a molded article in which polyolefin resin is firmly bonded to and unified with silicone rubber, as well as, a method for producing such molded articles.

The present invention relates to a molded article comprising a silicone rubber layer unified, either directly or via a primer, with a layer of a polyolefin resin which has grafted thereto a silicon compound having in each molecule at least one aliphatically unsaturated organic group and at least one silicon bonded hydrolyzable group.

The present invention also relates to a method for producing a molded article which comprises a layer of silicone rubber which is unified, either directly or via a primer, with a layer of a grafted polyolefin resin which has grafted thereto a silicon compound having in each molecule at least one aliphatically unsaturated organic group and at least one silicon-bonded hydrolyzable group, said method comprising (A) preparing the grafted polyolefin resin by heat-mixing a polyolefin resin and the silicon compound in the presence of a free radical initiator, (B) fabricating a polyolefin resin molded article from the grafted polyolefin resin by a molding process, and (C) bringing a silicone rubber composition directly into contact with a surface of the polyolefin resin molded article, or bringing a silicon rubber composition into contact with a primed surface of the polyolefin resin molded article, and (D) curing the silicone rubber composition at room temperature or with heating to form the silicone rubber layer.

The present invention also relates to a method for producing a molded article which comprises a layer of silicone rubber which is unified, either directly or via a primer, with a layer of a grafted polyolefin resin which has grafted thereto a silicon compound having in each molecule at least one aliphatically unsaturated organic group and at least one silicon-bonded hydrolyzable group, said method comprising (a) preparing the grafted polyolefin resin by heat-mixing a polyolefin resin and the silicon compound in the presence of a free radical initiator, (b) injecting the grafted polyolefin resin into a cavity formed by at least one metal mold thereby partially filling the cavity, (c) injecting a silicone rubber composition into the space left from step (b), and (d) curing the silicone rubber composition at a temperature of at least 25°C, but no greater than the softening temperature of the grafted polyolefin resin.

With regard to the invention's silicon compound having in each molecule at least one aliphatically unsaturated organic group and at least one silicon-bonded hydrolyzable group, the aliphatically unsaturated organic group is to be radically reactive with free radicals generated in the polyolefin during the heat-mixing step. Examples of the aliphatically unsaturated organic group are alkenyl groups such as vinyl, allyl, propenyl, butenyl, etc.; acryloxypropyl; methacryloxypropyl; cyclohexenyl; and cyclopentadienyl. The silicon-bonded hydrolyzable group is exemplified by alkoxy groups such as methoxy, ethoxy, propoxy, butoxy, etc.; acyloxy groups such as acetoxy, propionoxy, etc.; ketoxime groups, also known as oxime groups; alkylamino groups; and arylamino groups. It is preferred that three hydrolyzable groups be present in the silicon compound.

As actual examples of such silicon compounds, one can list vinyltrimethoxysilane, vinyltriethoxysilane, vinyltrimethoxyethoxysilane, vinyltriisopropoxysilane, gamma-acryloxypropyltrimethoxysilane, gamma-methacryloxypropyl-trimethoxysilane, vinyltri(methylethylketoximo)silane, vinylmethoxydi(methylethylketoximo)silane, and vinyldimethoxy- (methylethylketoximo)silane.

The polyolefin resin layer of the present invention is a layer of grafted polyolefin resin, for example, polyethylene resin, polypropylene resin, polybutylene resin, polyisobutylene resin, or a derivative thereof, which has been grafted by the silicon compound. Such resins can be produced, for example, by the methods described in U.S. Pat. No. 3,646,155 and U.S. Pat. No. 3,075,948 which are hereby incorporated by reference to show grafted polyolefin resins, however, they are preferably prepared as described below.

The silicone rubber layer of the present invention can be prepared from a silicone rubber composition such as an addition-curable (based on a platinum or platinum-type catalyst) silicone rubber composition, a free radical-curing (based on an organoperoxide catalyst) silicone rubber composition, a condensation-curing silicone rubber composition. The former two types are preferred from the standpoints of adhesion and rapidity of curing. Addition-curable silicone rubbers which use a platinum-type catalyst are typically based on vinyl group- terminated diorganopolysiloxane, organohydrogenpolysiloxane, and platinum-type catalyst. The silicone rubber composition described below is particularly preferred in this regard. Radical-curing silicone rubbers which use organoperoxide catalysis are typically exemplified by compositions based on vinyl group-containing diorganopolysiloxane and an organoperoxide catalyst. Condensation-curing silicone rubbers are typically exemplified by compositions based on silanol group-containing diorganopolysiloxane, crosslinker, and condensation reaction catalyst (for example, an organotin compound, titanate ester, etc.).

The molded article of the invention comprises a layer of silicone rubber as described above unified, either directly or via a primer, with a layer of grafted polyolefin resin as described above. A primer is used when it is necessary to achieve the desired amount of bonding strength. Preferred examples of such primers are primer compositions comprised of alkoxysilane plus organosilicon compound having at least one SiH group in each molecule plus an organotitanium compound and primer compositions based on titanium coupling agent or organotitanate ester for example, isopropyl bis-acetylacetonate titanate, isopropyl bis-ethoxyacetylacetonate titanate, dibutyl bis-acetylacetonate titanate, and dibutyl bis-ethoxy- acetylacetonate titanate.

One method of preparing the grafted polyolefin resin/silicone rubber integral molded article of the present invention is to (A) produce the silicon compound-grafted polyolefin resin by mixing and heating, in the presence of a free radical-generating compound, polyolefin resin with the silicon compound having in each molecule at least one aliphatically unsaturated organic group and at least one silicon-bonded hydrolyzable group, (B) prepare a grafted polyolefin resin molded article by subjecting said grafted polyolefin resin to a molding process, and (C) bring the silicone rubber composition directly into contact with the surface of said grafted molded article, or bring the silicone rubber composition into contact with a primed surface of said grafted molded article, and then (D) cure said silicone rubber composition at room temperature or with heating.

By way of explanation of the preceding, the polyolefin resin and silicon compound having in each molecule at least one aliphatically unsaturated organic group and at least one silicon-bonded hydrolyzable group correspond to those specified above. The silicon compound can be used in this method in an amount within the range of 0.1 to 50 parts by weight and preferably 0.5 to 10 parts by weight per 100 parts by weight polyolefin resin.

A number of free radical-generating compounds suggest themselves, and one can list, for example, organoperoxides such as benzoyl peroxide, dichlorobenzoyl peroxide, dicumyl peroxide, di-tert-butyl peroxide, tert-butyl peracetate, 2,5-dimethyl-2,5-di(tert-butylperoxy)hexane, and tert-butyl perbenzoate; azo compounds such as azobisisobutyronitrile and dimethyl azodiisobutyrate. The organoperoxides are preferred.

In the present invention, the silicon compound-grafted polyolefin resin is prepared by mixing and heating polyolefin resin as described above with the silicon compound in the presence of the free radical-generating compound. The heating temperature and heating time will vary with the decomposition temperature or half-life of the free radical-generating compound, but the heating temperature is generally in the range of 130 to 200°C. The free radical-generating compound is used generally in an amount within the range of 0.01 to 2 parts by weight and preferably in the range of 0.05 to 0.5 part by weight per 100 parts by weight polyolefin resin.

The grafted polyolefin resin can be prepared in any device which can mix the polyolefin resin and silicon compound to homogeneity with heating. Such devices include, for example, kneader mixers, Banbury mixers, and kneader extruders. With regard to the mixing/heating method, after both granular polyolefin resin and liquid silicon compound have been placed in the apparatus, the silicon compound can then be dispersed on the surface of the polyolefin resin, and mixing/heating step can then be carried out. Alternatively, the polyolefin resin can be placed in the apparatus and then melted, and the silicon compound can then be added for mixing and heating. Otherwise, the polyolefin resin and silicon compound can both be charged at the same time into a kneader extruder, and fusion of the polyolefin resin and mixing/heating of the silicone compound can be carried out at the sane time. Any of these methods can be used in the invention. With regard to the preparation of a grafted polyolefin resin molded article by subjecting the grafted polyolefin resin to a molding process, suitable molding methods are those typically used for thermoplastic resins, and thus no specific restriction arises. Examples of suitable methods are as follows: the grafted polyolefin resins is pelletized and then molded by a molding method typically used for thermoplastic resins, or the grafted polyolefin resin is prepared in a kneader extruder and is then directly extruded or injected into a metal mold to afford a molded article.

The unvulcanized silicone rubber composition corresponds to those described above, and can be a liquid, paste, or putty at room temperature. Liquids and pastes (usually denoted as liquid silicone rubber compositions) are preferred for their ease of molding.

Particularly preferred as this liquid silicone rubber composition of the invention are those liquid silicone rubber compositions which are comprised of (1) organopolysiloxane having at least two lower alkenyl groups in each molecule, (2) organopolysiloxane having at least two silicon-bonded hydrogen atoms in each molecule, and (3) a platinum or platinum-type catalyst in a quantity sufficient to provide 0.1 to 1,000 parts by weight platinum metal or platinum-type metal for each one million parts by weight of the combined quantity of components (1) and (2), wherein the sum of the number of alkenyl groups in each molecule of component (1) and the number of hydrogen atoms in each molecule of component (2) is at least 5.

In explanation of the preceding, component (1) is the principal component of the silicone rubber-generating organopolysiloxane, and curing proceeds by the addition reaction of this component with component (2) under the catalytic activity of component (3). Component (1) must have at least two silicon-bonded lower alkenyl groups in each molecule. When there are fewer than two lower alkenyl groups per molecule, a good cured product cannot be obtained because a network structure will not be formed. This lower alkenyl group is exemplified by vinyl, allyl, and propenyl. The lower alkenyl groups can be present at any location in the molecule, but are preferably present at least at the molecular terminals. The molecular configuration of this component can be straight chain, branch-containing straight-chain, cyclic, or network, but a straight chain, possibly slightly branched, is preferred. The molecular weight of this component is not specifically restricted. While the corresponding viscosity can range from that of a low-viscosity liquid to a very high-viscosity gum and is thus also not specifically restricted, a viscosity of at least 100 mPas at 25°C is preferred in order to acquire the cured product in the form of a rubbery elastomer. These organopolysiloxanes are exemplified by vinylpolysiloxanes,
methylvinylsiloxane-dimethylsiloxane copolymers,
dimethylvinylsiloxy-terminated dimethylpolysiloxanes,
dimethylvinylsiloxy-terminated dimethylsiloxane-methylphenylsiloxane copolymer,
dimethylvinylsiloxy-terminated dimethylsiloxane-diphenylsiloxane-methylvinylsiloxane copolymers,
trimethylsiloxy-terminated dimethylsiloxane-methylvinylsiloxane copolymers,
trimethylsiloxy-terminated dimethylsiloxane-methylphenylsiloxane-methylvinylsiloxane copolymers,
dimethylvinylsiloxy-terminated methyl (3,3,3-trifluoropropyl)-polysiloxanes,
dimethylvinylsiloxy-terminated dimethylsiloxane-methyl (3,3,3-trifluoropropyl)siloxane copolymers, and
polysiloxanes composed of CH₂=CH(CH₃)₂SiO_{1/2} units, (CH₃)₃Si_{1/2} units, and SiO_{4/2} units.
The invention can also use combinations of the above organopolysiloxanes.

Component (2) used in the present invention acts as a crosslinker for component (1), and curing proceeds by the addition reaction of the silicon-bonded hydrogen atoms of the present component with the lower alkenyl groups of component (1) under the catalytic activity of component (3). Component (2) must contain at least two silicon-bonded hydrogen atoms in each molecule in order to function as a crosslinker.

In addition, the sum of the number of alkenyl groups in each molecule of component (1) plus the number of silicon- bonded hydrogen atoms in each molecule of component (2) is to be at least 5. Below 5 is to be avoided because a network structure essentially cannot be formed in such a case, and a good molded article cannot then be obtained.

The molecular configuration of component (2) is not specifically restricted, and can be straight chain, branch- containing straight chain, cyclic, etc. The molecular weight of this component also is not specifically restricted, but the corresponding viscosity is preferably 0.001 to 50 Pa.s at 25°C in order to obtain a good miscibility with component (1).

Component (2) is preferably added in a quantity which provides a value of 0.5:1 to 20:1 for the molar ratio between the total quantity of silicon-bonded hydrogen atoms in (2) to the total quantity of all lower alkenyl groups in component (1). A good curability cannot be obtained at a molar ratio below 0.5:1, while at values exceeding 20:1 the hardness tends to increase when the cured product is heated. Furthermore, when an organosiloxane containing a large number of alkenyl groups is supplementarily added for the purpose of reinforcement, a supplementary addition of the instant SiH-containing component is preferably made in order to offset these alkenyl groups.

As examples of (2), one can list
trimethylsiloxy-terminated methylhydrogenpolysiloxanes,
trimethylsiloxy-terminated dimethylsiloxane-methylhydrogen-siloxane copolymers
dimethylhydrogensiloxy-terminated dimethylsiloxane-methylhydrogensiloxane copolymers,
dimethylsiloxane-methylhydrogensiloxane cyclic copolymers,
copolymers composed of (CH₃)₂HSiO_{1/2} units and SiO_{4/2} units, and
copolymers composed of (CH₃)₃SiO_{1/2} units, (CH₃)₂HSiO_{1/2} units, and SiO_{4/2} units.

Component (3) is a catalyst for the addition reaction of silicon-bonded hydrogen atoms with alkenyl groups, and actual examples are chloroplatinic acid, chloroplatinic acid dissolved in alcohol or ketone and the resulting solution aged, chloroplatinic acid-olefin complexes, chloroplatinic acid- alkenylsiloxane complexes, chloroplatinic acid-diketone complexes, platinum black, or platinum supported on a carrier. Other platinum-type catalyst can also be used such as rhodium compound and complexes and iridium compounds and complexes. Platinum catalysts are preferred.

Component (3) should be added at 0.1 to 1,000 parts by weight as platinum metal or platinum-type metal for each one million parts by weight of the combined quantities of components (1) and (2). The crosslinking reaction will not proceed satisfactorily at below 0.1 part by weight, while exceeding 1,000 parts by weight is uneconomical. In the typical case, the quantity of addition is approximately 1 to 100 parts by weight as platinum metal or platinum-type metal.

Filler can be blended into the liquid silicone rubber composition of the invention in order to adjust the fluidity or raise the mechanical strength of the molded article. This filler is exemplified by reinforcing fillers such as precipitated silica, fumed silica, calcined silica, and fumed titanium dioxide, and by nonreinforcing fillers such as quartz powder, diatomaceous earth, asbestos, aluminosilicate, iron oxide, zinc oxide, and calcium carbonate. The filler can be used without modification, or after a surface treatment with an organosilicon compound such as hexamethyldisilazane, trimethylchlorosilane, or polymethylsiloxane. Furthermore, unless the object of the invention is adversely affected, the organopolysiloxane composition used in the invention can contain a small or very small quantity of an additive intended to inhibit the curing reaction such as, for example, acetylenic compounds, hydrazines, triazoles, phosphines, mercaptans, etc. It is also permissible to add as desired, for example, pigments, heat stabilizers, flame retardants, plasticizers, and organopolysiloxane having one alkenyl group in each molecule in order to lower the modulus.

Organoperoxide-based radical reaction-curing liquid silicone rubber compositions are also preferred liquid silicone rubber compositions. These are based on a vinyl-containing diorganopolysiloxane which is liquid at room temperature and a catalytic quantity of organoperoxide, while inorganic fillers, for example, fumed silica or precipitated silica, heat stabilizers, pigments, etc., can be added as necessary. The organoperoxide is preferably selected from those having a decomposition temperature in the range of +25°C to +100°C.

Furthermore, the liquid silicone rubber composition may be a condensation-curing liquid silicone rubber composition which cures in the presence of a condensation catalyst such as an organotin compound, a titanium compound, etc. These condensation-curing liquid silicone rubber compositions are compositions based on hydroxyl-terminated diorganopolysiloxane which is liquid at room temperature, crosslinker, and a catalytic quantity of a condensation catalyst. It is also permissible to add inorganic filler, for example, fumed silica or precipitated silica, heat stabilizers, pigments, etc.

Methods typically used to prepare thermoplastic resin/silicone rubber composites can be used as the method for bringing the silicone rubber composition into contact with the surface of the molded article of the above-described grafted polyolefin resin followed by curing at room temperature or with heating. The following methods are exemplary of such methods: methods in which the silicone rubber composition is mounted on the surface of the grafted polyolefin resin molded article followed by heating/compresson molding; injection molding methods in which the grafted polyolefin resin molded article is placed in a metal mold and the silicone rubber composition is then injected into the metal mold with heating; methods in which the silicone rubber composition is coated on the surface of the grafted polyolefin resin molded article and this is then passed through an oven; methods in which the grafted polyolefin resin molded article is immersed in a low-viscosity liquid silicone rubber composition, removed from the liquid, and passed through an oven; methods in which a silicone rubber composition which cures at room temperature under the influence of moisture is filled between grafted polyolefin resin molded articles, and the assembly is then allowed to stand and cure. Of course, as detailed above, a primer can be used as desired

The grafted polyolefin resin/silicone rubber integral molded article of the present invention can also be prepared as follows: (a) preparing the silicon compound-grafted polyolefin resin prepared by mixing and heating, in the presence of a free radical-generating compound, the polyolefin resin with the silicon compound having in each molecule at least one aliphatically unsaturated organic group and at least one silicon-bonded hydrolyzable group, (b) injecting the grafted polyolefin resin in a first injection into a cavity formed from at least one metal mold, and then (c) injecting the silicone rubber composition in a second injection into said cavity, and the silicone rubber composition is then cured at a temperature of at least 25°C, but no greater than the softening temperature of the grafted polyolefin resin.

In the injection method, the curing temperature for the silicone rubber composition injected in the second injection must be at least 25°C, but no greater than the softening temperature of the polyolefin resin injected in the first injection. A practical curing rate for the liquid silicone rubber is not obtained at temperatures below 25°C, while a composite molded article with high dimensional accuracy cannot be produced when the softening temperature of the polyolefin resin is exceeded.

With regard to the injection of the silicone rubber composition, the second injection in the present invention, it is preferred that this silicone rubber composition be prepared prior to the second injection by mixing its constituent components at low temperatures. This mixing temperature is preferably in the range of -60°C to +5°C and particularly preferably is in the range of -30°C to 0°C. The organopolysiloxanes used in the present invention tend to harden at temperatures below -60°C and so compositions cannot be made and they cannot be injection molded at such temperatures, while curing actually proceeds at temperatures exceeding +5°C, making injection molding difficult and preventing the production of composites with a high dimensional accuracy.

While the injection method of the invention requires at least two injection processes for each composite, three of more injection processes can nevertheless be used. In such a case, "first injection" and "second injection" refer to the sequential relationship between two consecutive injection processes.

The metal mold used in the present invention can be horizontally or vertically separable, and can consist of a single metal mold or a plural number of metal molds, in either case forming a suitable cavity when assembled. Metal molds known in the art can be used.

In the method of the invention, both the first injection of grafted polyolefin resin and the second injection of silicone rubber composition can be into the cavity of the same metal mold. Alternatively, the first injection of grafted polyolefin resin is made into a metal mold, this metal mold is opened, another metal mold having a molding concavity is assembled onto the metal mold containing the grafted polyolefin molded article, and the second injection, of silicone rubber composition, is then made into the cavity formed continuously with the cavity for the first injection.

A primer can be used in the present invention in order to further improve the adhesion between the grafted polyolefin resin and silicone rubber. When a primer is used, the first injection of grafted polyolefin resin is made into the metal mold, which is then opened; primer is coated or sprayed on the surface of the grafted polyolefin molded article; and the second injection of silicone rubber composition is then carried out followed by curing. Suitable primers in this regard are those based on titanate ester and those based on silane coupling agent.

The method of the present invention provides for the highly productive manufacture of polyolefin resin/silicone rubber integral molded articles because it can be readily implemented by connecting a cooling device to a known liquid silicone rubber injection molder, and because it uses known metal molds and known polyolefin resin molders.

It is anticipated that the grafted polyolefin resin/silicone rubber integral molded articles of the present invention will be useful as various components in many industrial sectors, for example, the electric/electronic and automotive sectors.

The invention which is properly delineated in the claims will be explained in the following with reference to illustrative examples. In the examples, parts = parts by weight, and the viscosity is the value measured at 25°C.

### Example 1

100 Parts polyethylene resin (Hizex® 1300T high-density polyethylene from Mitsui Sekiyu Kagaku Kogyo Kabushiki Kaisha, Japan), 3 parts vinyltrimethoxysilane (SH6300 from Toray Silicone Co. Ltd., Japan), and 0.1 part dicumyl peroxide were placed in a kneader mixer and mixed at 200°C for 30 minutes to afford a vinyltrimethoxysilane-grafted polyethylene resin. This resin was placed in a compression metal mold and pressed into a 4 mm thick sheet. A primer composition, consisting of the mixture of ethyl polysilicate (partial hydrolyzate of ethyl ortho silicate), tetrabutyl titanate, methylhydrogenpoly- siloxane, and n-hexane, was applied on the surface of this sheet, which was then air-dried for 20 minutes.

100 Parts dimethylvinylsiloxy-terminated dimethylpoly- siloxane having a viscosity of 2 Pa.s and a vinyl group content of 0.25 wt%, 30 parts wet-method silica having a specific surface area of 200 m2/g, parts trimethylsiloxy-terminated methylhydrogenpolysiloxane having a viscosity of 0.01 Pa.s and a silicon-bonded hydrogen atom content of 1 wt%, and 0.1 part isopropanol solution of chloroplatinic acid (platinum content = 3 wt%) were combined and mixed to obtain an addition-curing liquid silicone rubber composition.

This addition-curing liquid silicone rubber composition was poured into the metal mold which already contained the primed vinyltrimethoxysilane-grafted polyethylene resin sheet. Thermal curing was then conducted at 80°C for 5 minutes. Cooling and removal from the metal mold afforded a molded article in which the grafted polyethylene resin was tightly unified with the cured silicone rubber product from the liquid silicone rubber composition. The molded article made of these two layers was inserted into the grips of a tensile strength tester, and the tensile strength was then measured: failure occurred in the silicone rubber layer, but the interface was undamaged. The rupture strength was 30 kg/cm2.

### EXAMPLE 2

An integral molded article of grafted polypropylene resin and the silicone rubber obtained from a liquid silicone rubber composition was prepared as described in Example 1, with the modification that a polypropylene resin (Noblen® Y101, 100% polypropylene from Sumitomo Kagaku Kogyo Kabushiki Kaisha, Japan) was used in place of the polyethylene resin in Example 1. Again, the molded article was inserted into the grips of a tensile tester and the tensile strength was measured: failure occurred in the silicone rubber, but the interface was undamaged.

### EXAMPLE 3

100 Parts polypropylene resin (Noblen® Y101, 100% polypropylene from Sumitomo Kagaku Kogyo Kabushiki Kaisha, Japan), 3 parts vinyltriethoxysilane, and 0.1 part dicumyl peroxide were placed in a kneader extruder, mixed at 200°C, and the mixture was extruded through a sheet-molding die to provide a 2 mm thick sheet of vinyltriethoxysilane-grafted polypropylene resin. This sheet was then coated with an oxime-liberating silicone rubber curable at room temperature under the influence of moisture (SH780 Sealant from Toray Silicone Co., Ltd., Japan), and was then maintained at room temperature for 7 days to provide a grafted polypropylene resin/silicone rubber integral molded article. The molded article was inserted into the grips of a tensile strength tester and the tensile strength was then measured: failure occurred in the silicone rubber layer, and the rupture surface exhibited 100% cohesive failure.

### EXAMPLE 4

A 4 mm thick unvulcanized molded article of a silicone rubber composition (a mixture of 100 parts vinyl-containing diorganopolysiloxane gum and 40 parts fumed silica, containing 1.0 wt% 2,4-dichlorobenzoyl peroxide as crosslinker) was pressed on a sheet of the grafted polyethylene resin prepared as in Example 1. This was then press-heated at 200 kg/cm2 and 105°C for 20 minutes to cure the silicone rubber. A molded article was obtained in which the grafted polyethylene resin and silicone rubber were tightly bonded.

### EXAMPLE 5

A vinyltriethoxysilane-grafted polypropylene resin sheet prepared as in Example 3 was cut into pellets. These pellets were placed in a thermoplastic resin injection molder and melted at 170°C.

100 Parts dimethylvinylsiloxy-terminated dimethylpolysiloxane having a viscosity of 2 Pa.s and a vinyl group content of 0.25 wt%, 30 parts wet-method silica having a specific surface area of 200 m2/g, and parts trimethylsiloxy-terminated methylhydrogenpolysiloxane having a viscosity of 0.01 Pa.s and a silicon-bonded hydrogen atom content of 1 wt% were mixed to afford a mixture (Mixture A) having a viscosity of 500 Pa.s at a shear rate of 10 sec-1. Then, 100 parts dimethylpolysiloxane as described above, 30 parts wet-method silica as described above, and 0.1 part isopropanol solution of chloroplatinic acid solution (platinum content = 3 wt%) were mixed to afford a mixture (Mixture B) similar to the preceding.

Mixtures A and B were placed in separate liquid silicone rubber composition tanks. Mixtures A and B were then respectively fed by pressure-delivery pumps to a static mixer cooled in advance to -5°C (by a coolant-circulating device), and were mixed in a 1:1 ratio (weight ratio) to prepare a liquid silicone rubber composition.

A continuous injection molder was then prepared. This device consisted of a first lower stationary metal mold having a molding concavity, a second lower stationary metal mold having a molding concavity identical to that in the first lower stationary metal mold, a first upper movable metal mold having a sprue and gate for the first injection, and a second upper movable metal mold having a molding concavity and a sprue and gate for the second injection. The machine was configured so that the two upper movable metal molds could be alternately and respectively clamped onto the two lower stationary metal molds, with the first upper movable metal mold closing off the molding concavities of the lower stationary metal molds to form partial cavities, while the second upper movable metal mold clamped onto the lower stationary metal molds to form cavities corresponding to the whole object.

Using this machine, a first injection, of the above grafted polypropylene resin, was made into the partial cavity (regulated to 70°C) formed by clamping the first upper movable metal mold onto the first lower stationary metal mold. The injection time was 10 seconds and the setting time was 40 seconds. The first movable metal mold was then released, and a primer (based on a titanate ester, isopropyl bis-acetylacetonate titanate, Plainact® 11 from Ajinomoto Kabushiki Kaisha, Japan) was applied on the surface of the grafted polypropylene molded article. The first lower stationary metal mold, containing the primed grafted polypropylene resin molded article, was then assembled with the second movable metal mold, and the liquid silicone rubber composition prepared as above was injected into the newly formed complete cavity and then cured. The injection conditions were an injection time of 10 seconds, a heating time of 30 seconds, and a cavity temperature of 70°C. The silicone rubber from the liquid silicone rubber composition and the grafted polypropylene resin were solidly unified in the obtained composite molded article. The interface was smooth and flat, the dimensional accuracy was very good, and the productivity was high. The molded article was inserted into the grips of a tensile strength tester, and the tensile strength was then measured: failure occurred in the silicone rubber layer, but the interface was undamaged. The rupture strength was 30 kg/cm2.

### COMPARISON EXAMPLE 1

Polyethylene resin as described in Example 1 was placed in a compression metal mold, pressed into a 4 mm thick sheet, and a primer composition was then applied by the method described in Example 1. An addition-curing liquid silicone rubber composition as described in Example 1 was poured on the sheet, and thermal curing was carried out at 80°C for 5 minutes. After cooling and removal from the metal mold, it was found that the polyethylene resin did not adhere to the silicone rubber from the liquid silicone rubber composition, and an integral molded article had not been produced. This comparison example showed that a grafted polyethylene resin was needed to obtain a molded article in which the resin and the silicone rubber were tightly bonded.

### COMPARISON EXAMPLE 2

100 Parts of the polypropylene resin as described in Example 2 and 3 parts vinyltrimethyoxysilane as described in Example 1 were placed in a kneader mixer and mixed at 200°C for 30 minutes to prepare a vinyltrimethoxysilane-admixed polypropylene resin. This resin was placed in a compression metal mold, pressed into a 4 mm thick sheet, and a primer was applied by the method described in Example 1. An addition- curing liquid silicone rubber composition as described in Example 2 was then poured on, followed by thermal curing at 80°C for 5 minutes. After cooling and removal from the metal mold, it was found that the polypropylene resin was not adhered to the silicone rubber from the liquid silicone rubber composition, and an integral molding was not obtained. This comparison example shows that a mixture of silicon compound and polyolefin resin without being reacted will not produce an integral molded article and that in order for an integral molded article to be formed, they need to be reacted to form a grafted polyolefin resin which in turn will form a molded article in which the silicone rubber and the grafted polyolefin resin layers is tightly bonded.

### COMPARISON EXAMPLE 3

The room temperature/moisture-curing silicone rubber composition described in Example 3 was coated on the surface of a polypropylene resin sheet prepared as described in Comparison Example 2, followed by curing by maintenance at room temperature for 7 days. The molded article was inserted in the grips of a tensile strength tester, and the tensile strength was then measured: the polypropylene resin was easily peeled from the silicone rubber, and the peeled surface corresponded to 100% adhesive failure.

Because the grafted polyolefin resin/silicone rubber integral molded article of the invention is a molded article in which a silicone rubber layer is unified, either directly or through a primer, with a layer of a polyolefin resin which has been grafted by a silicon compound having in each molecule at least one aliphatically unsaturated organic group and at least one silicon-bonded hydrolyzable group, it is characterized by an excellent interlayer bonding and bonding durability.

With regard to the production of such a molded article comprising a silicone rubber layer unified, either directly or through a primer, with a layer of a polyolefin resin which has been grafted by a silicon compound having in each molecule at least one aliphatically unsaturated organic group and at least one silicon-bonded hydrolyzable group, a method of the invention comprises the following: (A) preparing the silicon compound-grafted polyolefin resin by mixing and heating polyolefin resin, in the presence of a free radical-generating compound, with the silicon compound, (B) fabricating a grafted polyolefin resin molded article by subjecting said grafted polyolefin resin to a molding process, and (C) bringing a silicone rubber composition directly into contact with the surface of said grafted polyolefin molded article, or bringing a silicone rubber composition into contact with the primed surface of said grafted polyolefin molded article, and said silicone rubber composition is then cured at room temperature or with heating. It is a characteristic of this method that it provides for the reliable, easy, and highly reproducible production of integral molded articles with excellent interlayer bonding between layers of polyolefin and silicone rubber.

With regard to the production of such a molded article comprising a silicone rubber layer unified, either directly or through a primer, with a layer of a polyolefin resin which has been grafted by a silicon compound having in each molecule at least one aliphatically unsaturated organic group, and at least one silicon-bonded hydrolyzable group a method of the invention also comprises the following: (a) preparing said silicon compound-grafted polyolefin resin by mixing and heating polyolefin resin, in the presence of a free radical-generating compound, with the silicon compound, (b) injecting the grafted polyolefin resin in a first injection into a cavity formed from at least one metal mold, and then (c) injecting a silicone rubber composition in a second injection into said cavity, and the silicone rubber composition is then cured at a temperature of at least 25°C, but no greater than the softening temperature of the grafted polyolefin resin. It is a characteristic of this method that it provides for the highly productive manufacture of integral molded articles with good interlayer bonding in which the layers are polyolefin and silicone rubber.

## Claims

1. A molded article comprising a silicone rubber layer unified, either directly or via a primer, with a layer of a polyolefin resin which has grafted thereto a silicone compound having in each molecule at least one aliphatically unsaturated organic group and at least one silicon bonded hydrolyzable group.

2. A method for producing a molded article which comprises a layer of silicone rubber which is unified, either directly or via a primer, with a layer of a grafted polyolefin resin which has grafted thereto a silicone compound having in each molecule at least one aliphatically unsaturated organic group and at least one silicon-bonded hydrolyzable group, said method comprising
(A) preparing the grafted polyolefin resin by heat-mixing a polyolefin resin and the silicon compound in the presence of a free radical initiator,
(B) fabricating a polyolefin resin molded article from the grafted polyolefin resin by a molding process, and
(C) bringing a silicone rubber composition directly into contact with a surface of the grafted polyolefin resin molded article, or bringing a silicone rubber composition into contact with a primed surface of the grafted polyolefin resin molded article, and
(D) curing the silicone rubber composition at room temperature or with heating to form the silicone rubber layer.

3. The method in accordance with claim 2 in which the liquid silicone rubber composition is brought into contact with a primed surface of the grafted polyolefin resin molded article.

4. A method for producing a molded article which comprises a layer of silicone rubber which is unified, either directly or via a primer, with a layer of a grafted polyolefin resin which has grafted thereto a silicon compound having in each molecule at least one aliphatically unsaturated organic group and at least one silicon-bonded hydrolyzable group, said method comprising
(A) preparing the grafted polyolefin resin by heat-mixing a polyolefin resin and the silicon compound in the presence of a free radical initiator,
(B) injecting the grafted polyolefin resin into a cavity formed by at least one metal mold thereby partially filling the cavity, optionally coating or spraying a primer on the surface of the grafted polyolefin molded article,
(C) injecting a silicone rubber composition into the space left from step (B) and
(D) curing the silicone rubber composition at a temperature of at least 25°C, but no greater than the softening temperature of the grafted polyolefin resin.

## Patentansprüche

1. Geformter Gegenstand umfassend eine Siliconkautschukschicht, die entweder direkt oder über ein Grundiermittel mit einer Schicht aus einem Polyolefinharz vereinigt ist, das mit einer Siliziumverbindung gepfropft wurde, die in jedem Molekül mindestens eine aliphatisch ungesättigte organische Gruppe und mindestens eine siliziumgebundene hydrolysierbare Gruppe aufweist.

2. Verfahren zur Herstellung eines geformten Gegenstandes, der eine Schicht aus Siliconkautschuk umfaßt, die entweder direkt oder über ein Grundiermittel mit einer Schicht aus einem gepfropften Polyolefinharz vereinigt ist, wobei das Polyolefinharz mit einer Siliziumverbindung gepfropft wurde, die in jedem Molekül mindestens eine aliphatisch ungesättigte organische Gruppe und mindestens eine siliziumgebundene hydrolysierbare Gruppe aufweist, wobei das Verfahren umfaßt, daß man (A) das gepfropfte Polyolefinharz herstellt, indem man ein Polyolefinharz und die Siliziumverbindung in Gegenwart eines Radikalinitiators erhitzt und vermischt, (B) einen geformten Gegenstand aus Polyolefinharz herstellt aus dem gepfropften Polyolefinharz mit einem Formungsverfahren und (C) eine Siliconkautschukzusammensetzung direkt in Kontakt bringt mit einer Oberfläche des geformten Gegenstandes aus gepfropftem Polyolefinharz oder eine Siliconkautschukzusammensetzung in Kontakt bringt mit einer grundierten Oberfläche des geformten Gegenstandes aus gepfropftem Polyolefinharz und (D) die Siliconkautschukzusammensetzung bei Raumtemperatur oder unter Erwärmen härtet unter Bildung der Siliconkautschukschicht.

3. Verfahren nach Anspruch 2, wobei man die flüssige Siliconkautschukzusammensetzung in Kontakt bringt mit einer grundierten Oberfläche des geformten Gegenstandes aus gepfropftem Polyolefinharz.

4. Verfahren zur Herstellung eines geformten Gegenstandes, der eine Schicht aus Siliconkautschuk umfaßt, die entweder direkt oder über ein Grundiermittel mit einer Schicht eines gepfropften Polyolefinharzes vereinigt ist, das mit einer Siliziumverbindung gepfropft wurde, die in jedem Molekül mindestens eine aliphatisch ungesättigte organische Gruppe und mindestens eine siliziumgebundene hydrolysierbare Gruppe aufweist, wobei das Verfahren umfaßt, daß man (A) das gepfropfte Polyolefinharz herstellt, indem man ein Polyolefinharz und die Siliziumverbindung in Gegenwart eines Radikalinitiators erhitzt und vermischt, (B) das gepfropfte Polyolefinharz in einen Hohlraum injiziert, der durch mindestens eine Metallform gebildet wird, wodurch der Hohlraum teilweise gefüllt wird, gegebenenfalls ein Grundiermittel auf die Oberfläche des geformten Gegenstandes aus gepfropftem Polyolefin aufträgt oder aufsprüht, (C) eine Siliconkautschukzusammensetzung in den in Stufe (B) übriggebliebenen Raum injiziert und (D) die Siliconkautschukzusammensetzung bei einer Temperatur von mindestens 25°C aber nicht mehr als der Erweichungstemperatur des gepfropften Polyolefinharzes härtet.

## Revendications

1. Un article moulé comprenant une couche de caoutchouc de silicone unie, directement ou par l'intermédiaire d'un primaire, à une couche d'une résine polyoléfinique à laquelle est greffé un composé silicié dont chaque molécule contient au moins un groupe organique aliphatiquement insaturé et au moins un groupe hydrolysable lié au silicium.

2. Un procédé de production d'un article moulé qui comprend une couche de caoutchouc de silicone qui est unie, directement ou par l'intermédiaire d'un primaire, à une couche d'une résine polyoléfinique greffée à laquelle est greffé un composé silicié dont chaque molécule contient au moins un groupe organique aliphatiquement insaturé et au moins un groupe hydrolysable lié au silicium, ledit procédé consistant à
(A) préparer la résine polyoléfinique greffée en mélangeant à chaud une résine polyoléfinique et le composé silicié en présence d'un initiateur de réaction radicalaire,
(B) façonner un article moulé en résine polyoléfinique par un procédé de moulage à partir de la résine polyoléfinique greffée, et
(C) mettre directement en contact une composition de caoutchouc de silicone avec une surface de l'article moulé en résine polyoléfinique greffée, ou mettre en contact une composition de caoutchouc de silicone avec une surface traitée par un primaire de l'article moulé en résine polyoléfinique greffée, et
(D) faire durcir la composition de caoutchouc de silicone à la température ambiante ou sous chauffage pour former la couche de caoutchouc de silicone.

3. Le procédé selon la revendication 2, dans lequel la composition de caoutchouc de silicone liquide est mise en contact avec une surface traitée par un primaire de l'article moulé en résine polyoléfinique greffée.

4. Un procédé de production d'un article moulé qui comprend une couche de caoutchouc de silicone qui est unie, directement ou par l'intermédiaire d'un primaire, à une couche d'une résine polyoléfinique greffée à laquelle est greffé un composé silicié dont chaque molécule contient au moins un groupe organique aliphatiquement insaturé et au moins un groupe hydrolysable lié au silicium, ledit procédé consistant à :
(A) préparer la résine polyoléfinique greffée en mélangeant à chaud une résine polyoléfinique et le composé silicié en présence d'un initiateur de réaction radicalaire,
(B) injecter la résine polyoléfinique greffée dans une cavité formée par au moins un moule métallique de manière à remplir partiellement la cavité, facultativement appliquer ou pulvériser un primaire sur la surface de l'article moulé en polyoléfine greffée,
(C) injecter une composition de caoutchouc de silicone dans l'espace laissé par l'étape (B) et
(D) faire durcir la composition de caoutchouc de silicone à une température d'au moins 25°C, mais non supérieure à la température de ramollissement de la résine polyoléfinique greffée.
